# EUROPEAN PATENT APPLICATION

(11) **EP 0 649 781 A1**
(43) Date of publication of application: **26.04.1995**
(21) Application number: 94116426.1
(22) Date of filing: 18.10.1994
(51) Int. Cl.: B60T 13/66

(54) **Brake system for vehicle**

(30) Priority: 25.10.1993 JP 266417/93
(71) Applicant: SUMITOMO ELECTRIC INDUSTRIES, LIMITED, Osaka 541 (JP)
(72) Inventor: Yoshino, Masato, c/o Itami Works of, Itami-shi, Hyogo (JP)
(74) Representative: Eder, Thomas, Dr.-Ing.

(57) **Abstract**

An electronic brake control system which is free of any change in the brake operation feelings during electronic control or even if the electronic control function should break down and which can assure braking forces even if the electronic control function should be lost. Wheel brakes (8) for the front vehicle wheels are connected to static pressure brake lines (A1,A2) leading to a tandem master cylinder (1). Wheel brakes (9) for the rear wheels are connected to dynamic pressure brake lines (B1,B2). To the dynamic pressure lines (B1,B2) is supplied a fluid pressure generated in a high fluid pressure generator (5) after adjusted by an electronically controlled pressure control valve (6). An electronic control unit (7) receives the signals from a brake operation detector (3) and a vehicle deceleration sensor (4) and outputs driving signals to the pressure control valve (6) to control braking forces so that a predetermined relation is maintained between the output of the detector (3) and that of the sensor (4).

## Description

The present invention relates to a brake system for a vehicle which operates safely even if its electronic control system should fail and which eliminates any significant change in the brake pedal feeling while the braking force is being electronically controlled.

ABS and TCS are known as typical electronic control systems in which the brake fluid pressure is controlled electronically. In some of such conventional brake systems, the stroke of the brake pedal is detected and the brake fluid from a dynamic pressure source is, after its pressure has been adjusted by means of an electronically controlled pressure control valve, introduced into a static pressure line which utilizes the master cylinder as its pressure source, to produce a brake fluid pressure corresponding to the stroke of the brake pedal (one of such systems is disclosed in Unexamined Japanese Patent Publication 59-220441 filed by the present applicant).

Many of such conventional electronic brake systems have a problem in that the brake pedal feeling changes during electronic control or if the system should fail. For example, the brake pedal can vibrate, be pushed back or get locked at a given point, or the driver may feel fluctuations in the force that counteracts the force applied to the pedal by the driver.

There is also known a brake system of the type in which, instead of controlling the static pressure generating means such as a master cylinder directly by means of the brake pedal, the control of the brake fluid pressure is carried out solely by electronically controlling the pressure from the dynamic pressure source according to the detected brake pedal stroke. This system is known by the name of "brake-by-wire". This system is free of changing pedal feelings. But instead, it has a problem in that the braking function is totally lost, should the electronic control function fail.

Thus, it is an object of the present invention to provide a brake system which is free of any change in the brake pedal feeling during electronically controlled braking and which ensures a high level of safety even if the electronic control function should fail.

In order to achieve this object, according to the present invention, there is provided a brake system for a vehicle comprising: wheel brakes each mounted on vehicle wheels; at least two mutually independent static pressure brake lines; a master cylinder for supplying fluid pressures to the at least two mutually independent static pressure brake lines; braking operation detecting means for detecting at least one of the force applied to a brake pedal, the stroke of the brake pedal and a static pressure produced in the master cylinder; a sensor for detecting at least one of the rotating speed of the vehicle wheel, the deceleration of the vehicle wheel, the deceleration of the vehicle, the braking torque applied to each vehicle wheel, and the fluid pressure applied to the brake piston of the each wheel brake; high fluid pressure generating means for generating high fluid pressure; dynamic pressure brake lines provided independently of the static pressure brake lines; an electronically controlled pressure control valve for adjusting the high fluid pressure generated in the high fluid pressure generating means to supply the adjusted high fluid pressure to the dynamic pressure brake lines; and an electronic control unit which receives detection signals from the braking operation detecting means and detection signals from the sensor and outputs control signals to the electronically controlled pressure control valve; wherein the at least two static pressure brake lines are connected to at least two of the wheel brakes, and the dynamic pressure brake lines are connected to at least two including the other two of the wheel brakes, and wherein the electronically controlled pressure control valve is controlled by the control signals from the electronic control unit so that the output of the sensor will fall within a predetermined relation with the output of the braking operation detecting means.

The static pressure brake lines and the dynamic pressure lines may be connected separately to two of the wheel brakes and to the other two wheel brakes, respectively. Otherwise, each of the wheels mounted on one of the axles of the vehicle may have both a wheel brake connected to one of the static pressure brake lines and a wheel brake connected to the dynamic pressure brake line.

Preferably, the wheel brakes connected to the dynamic pressure line are mounted on wheels having mechanical parking brakes or on driven wheels of an electric car or an automatic-transmission car.

According to the present invention, the static pressure brake lines and the dynamic pressure brake line are connected to different wheel brakes. Since the wheel brakes connected to the static pressure lines, which are directly connected to the brake pedal, are not electronically controlled, brake pedal feelings will never change during electronic control and even if the electronic control function should fail.

Also, even if the dynamic pressure brake line should fail, braking function will never be totally lost as far as at least one of two or more static pressure brake lines is functioning normally.

The brake fluid pressure in the dynamic pressure brake line is controlled so that a predetermined relation is maintained between the pressure in the dynamic pressure brake line and that in the static pressure brake lines. Thus, the inherent function of the electronic control is fully maintained.

According to the present invention, the wheel brakes connected to the static pressure lines, which are directly connected to the brake pedal, are independent of the electronic control. Thus, the brake system of the present invention can prevent any change in the brake pedal feelings during electronic control or even if the electronic control function should fail and at the same time can ensure safety even if the electronic control function should be lost.

Other features and objects of the present invention will become apparent from the following description made with reference to the accompanying drawings, in which:
Fig. 1 is a diagrammatic view of a brake system of a first embodiment (for a RWD car);
Fig. 2 is a diagrammatic view of a second embodiment (for a FWD car);
Fig. 3 is a diagrammatic view of a third embodiment (for a RWD car);
Fig. 4 is a diagrammatic view of another version of the third embodiment (for a RWD car);
Fig. 5 is a diagrammatic view of still another version of the third embodiment (for a FWD car);
Fig. 6 is a diagrammatic view of yet another version of the third embodiment (for a FWD car); and
Fig. 7 is a diagrammatic view of a fourth embodiment.

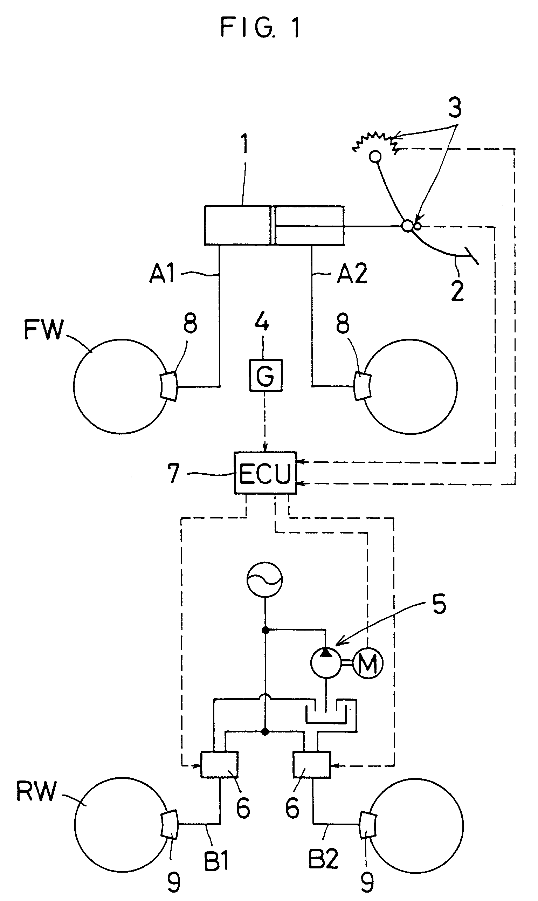

Fig. 1 shows the first embodiment. This brake system comprises: a tandem master cylinder 1 for supplying fluid pressure to two independent static pressure brake lines A1 and A2; a brake operation detector 3 for detecting the stroke of a brake pedal 2 (the illustrated detector detects the force applied to the pedal as well); a vehicle deceleration sensor 4 for detecting the deceleration of the vehicle; a high fluid pressure generator 5 having a power pump; an electronically controlled pressure control valve 6 for adjusting the high fluid pressure generated by the generator 5 according to control signals and applying the thus adjusted pressure to dynamic pressure brake lines B1 and B2 (this valve 6 may be a combination of an inlet valve and a discharge valve or may comprise separate inlet and discharge valves); an electronic control unit 7 for applying driving signals to the electronically controlled pressure control valves 6 in response to detection signals from the brake operation detector 3 and the vehicle deceleration sensor 4; front wheel brakes 8 mounted on the front vehicle wheels FW; and rear wheel brakes 9 mounted on the rear vehicle wheels RW. The static pressure brake lines A1 and A2 are connected to the respective front two wheel brakes 8, while the dynamic pressure brake lines B1 and B2 are connected to the respective rear two wheel brakes 9.

The electronic control unit 7 (ECU) outputs driving signals to the electronically controlled pressure control valves 6 so that the relation between the output of the brake operation detector 3 and that of the sensor 4 will be within a predetermined range which is stored in the ECU beforehand. With this arrangement, even if the load on the vehicle changes markedly, it is possible to keep constant the relation between the brake pedal operation and the vehicle deceleration by controlling the fluid pressure on the rear wheel brakes through the pressure control valves 6 with respect to a given brake pedal stroke (i.e. a given static brake fluid pressure and a given pressure on the front wheel brakes). In other words, the above relation is kept constant by controlling the effect of the brakes and the distribution of braking forces between the front and rear brake wheels.

Since the static pressure brakes (wheel brakes 8) connected directly to the brake pedal 2 are not electronically controlled, there will be no uncomfortable pedal kick-backs nor a phenomenon in which the brake pedal is pushed all the way down to the floor during electronic control or even if the electronic control function should fail.

The brake system shown in Fig. 1 is designed so that the supply of fluid pressure to the rear wheels is stopped if the electronic control function should fail. But on ordinary cars, a mechanical parking brake is provided for the rear wheels. Thus, even if the electronic control function should fail, it is possible to apply brakes to all four wheels by using the parking brake and the non-electronic static brakes for front wheels. Also, since the two static pressure brake lines, one for the right wheel brake and the other for the left, are independent of each other, even if one of them should break down due e.g. to damage to the piping, the other's function is kept intact.

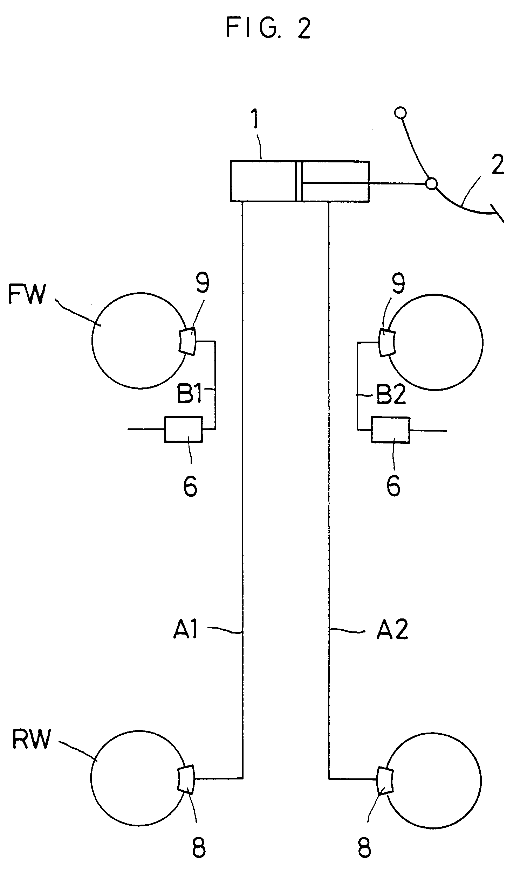

Fig. 2 shows the second embodiment, in which the wheel brakes 8, which are connected to the static pressure brake lines A1 and A2, are provided on the rear wheels RW, while the front wheels FW are braked by wheel brakes 9 to which the fluid pressure of the dynamic pressure brake lines B1 and B2 is supplied. Though not shown, it will be needless to say that this embodiment (as well as the third and fourth embodiments) also has the brake operation detector, high fluid pressure generator, electronic control unit and sensors as shown in Fig. 1.

The brake system of the second embodiment is advantageously applicable to an electric car of the type in which its front wheels FW are driven by an electric motor. With such a car, it is possible to use the motor as a generator for recovering the braking energy produced while the vehicle is being decelerated, in the form of an electric power. In other words, the motor can be used for regenerative braking. In this case, by reducing the fluid pressure applied to the driving wheels so that a larger part of the braking force is offered by the torque necessary to rotate the generator or motor, it is possible to increase the amount of energy recovered.

In the second embodiment, since the front wheels FW, which are used for regenerative braking, are braked by the wheel brakes 9 connected to the dynamic pressure brake lines B1 and B2, it is possible to perform the regenerative braking to a maximum degree by restricting the supply of fluid pressure to the brakes 9. If it is impossible to decelerate the vehicle to a desired level corresponding to the output of the brake operation detector (force applied to the brake pedal, its stroke or fluid pressure in the master cylinder), the electronically controlled pressure control valve 6 is activated to apply additional braking forces to the front wheels through the wheel brakes 9. Thus, it is possible to increase the recovery rate of the braking energy to a maximum.

For the same reasons as in the first embodiment, this system is also free of changes in brake pedal feelings during electronic control or even if the electronic control function should fail. Also, even if the dynamic pressure line or the dynamic pressure line and one of the static pressure lines should fail, it is possible to avoid the total shutdown of the braking system.

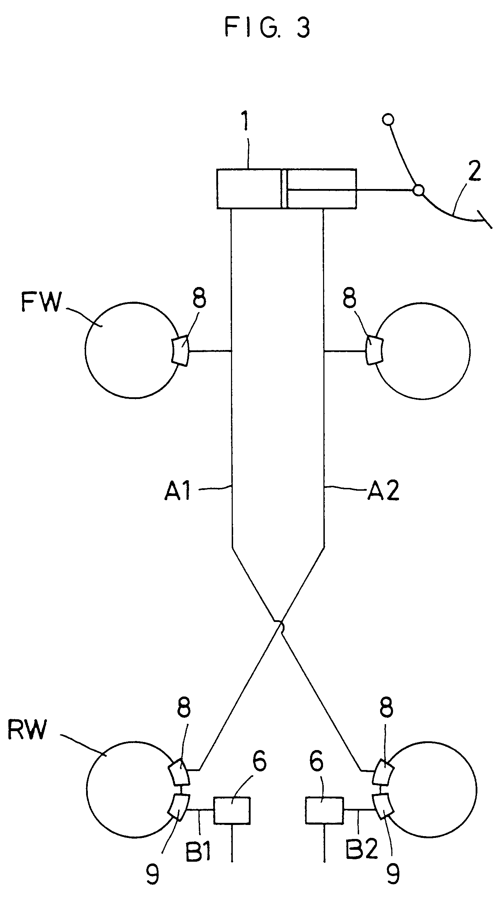

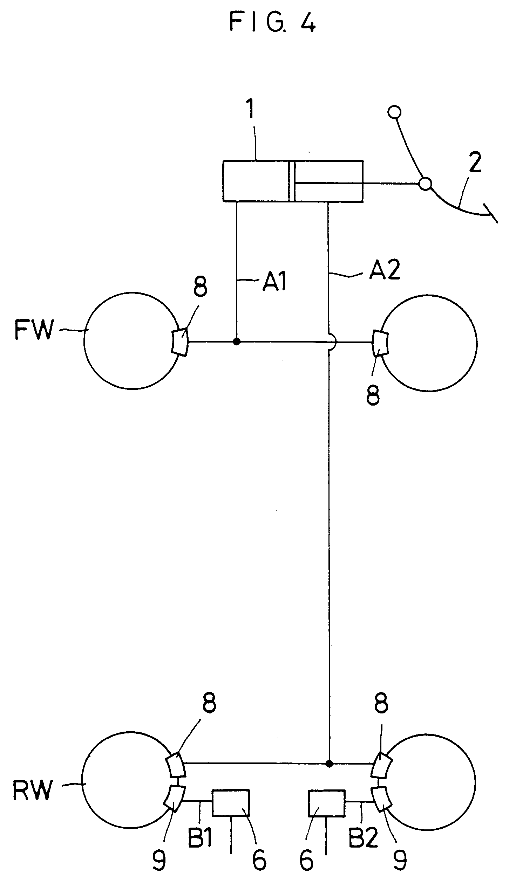

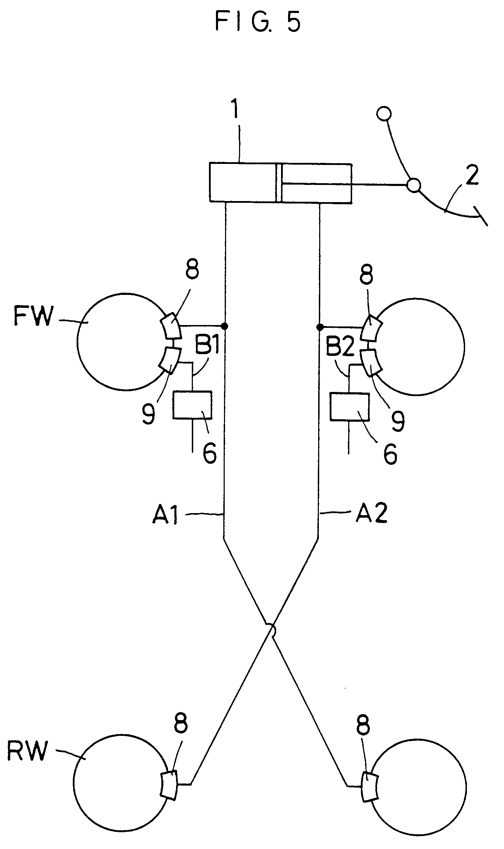

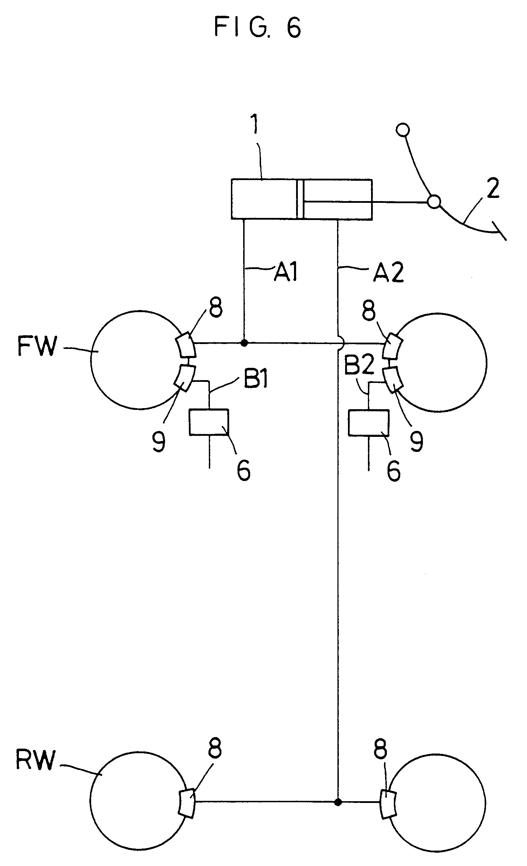

Figs. 3 to 6 show the third embodiment. These brake systems have four wheel brakes 8 connected to the static pressure lines A1 and A2 and mounted on the respective four vehicle wheels, and two wheel brakes 9 connected to the dynamic pressure lines B1 and B2 and mounted on the front or rear wheels. In other words, each of the front or rear wheels carries both wheel brakes 8 and 9. Such a pair of brakes 8 and 9 mounted on each wheel may form a one-piece unit (known as "2-pot brake") or may be separate members (with independent calipers).

With this arrangement, it is possible to apply brakes to all the four wheels even if the electronic control function should fail because all the wheels carry brake wheels connected to the static brake lines. Thus, this arrangement can achieve a higher-level safety than the systems of the first and second embodiments.

When comparing an electric car having the brake system of the third embodiment with one having that of the second embodiment, the former is lower in the braking energy recovery rate because its driving wheels carry wheel brakes 8 connected to the static pressure lines. Thus, in this embodiment, the static pressure brakes 8 mounted on the wheels that also carry dynamic pressure brakes 9 should be so designed that they produce the minimum braking force required to stop the vehicle in case of the failure of electronic control (e.g. by reducing the diameter of the brake pistons).

In this embodiment, even though some of the vehicle wheels carry both the wheel brake connected to the static pressure lines and the wheel brake connected to the dynamic pressure lines, brake pedal feelings can be kept unchanged during electronic control or even if the electronic control should fail, because the static pressure brake lines are provided independently of the electronically controlled dynamic pressure brake lines.

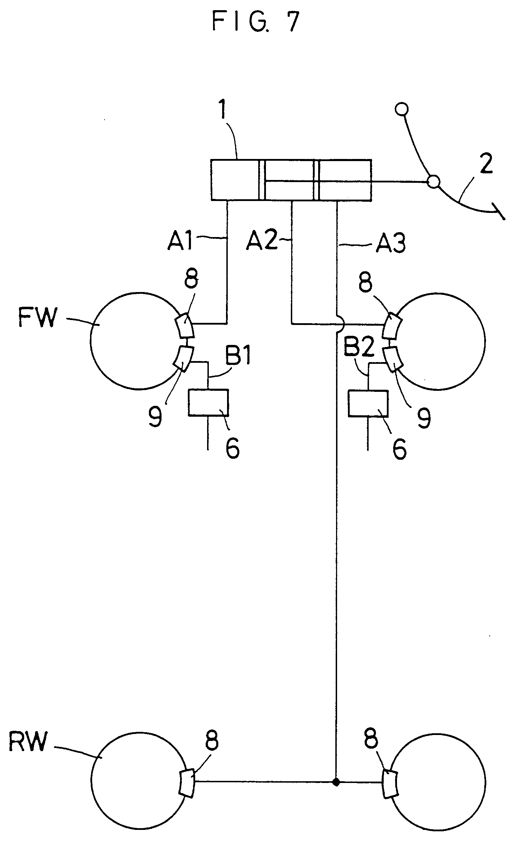

Fig. 7 shows the fourth embodiment. The brake system of this embodiment has three independent brake fluid lines A1, A2 and A3 which extend from the tandem master cylinder 1. One of them A3 is connected to the wheel brakes 8 for the rear wheels RW, while the other two lines A1 and A2 are connected to the wheel brakes 8 for the respective front wheels FW. With this arrangement, even if one of the lines should be damaged or broken, the loss of braking pressure is kept to a minimum.

The braking operation detector may be adapted to detect at least one of the force applied to a brake pedal, the stroke of the brake pedal and a static pressure produced in the master cylinder. Also, the sensor used in the present invention may be adapted to detect at least one of the revolving speed of the vehicle wheel, the deceleration of the vehicle wheel, the deceleration of the vehicle, the braking torque applied to each vehicle wheel, and the fluid pressure applied to the brake piston of each wheel brake.

## Claims

1. A brake system for a vehicle comprising:
wheel brakes each mounted on vehicle wheels;
at least two mutually independent static pressure brake lines;
a master cylinder for supplying fluid pressures to said at least two mutually independent static pressure brake lines;
braking operation detecting means for detecting at least one of the force applied to a brake pedal, the stroke of the brake pedal and a static pressure produced in said master cylinder;
a sensor for detecting at least one of the rotating speed of the vehicle wheel, the deceleration of the vehicle wheel, the deceleration of the vehicle, the braking torque applied to each vehicle wheel, and the fluid pressure applied to the brake piston of said each wheel brake;
high fluid pressure generating means for generating high fluid pressure;
dynamic pressure brake lines provided independently of said static pressure brake lines;
an electronically controlled pressure control valve for adjusting the high fluid pressure generated in said high fluid pressure generating means to supply the adjusted high fluid pressure to said dynamic pressure brake lines; and
an electronic control unit which receives detection signals from said braking operation detecting means and detection signals from said sensor and outputs control signals to said electronically controlled pressure control valve;
wherein said at least two static pressure brake lines are connected to at least two of said wheel brakes, and said dynamic pressure brake lines are connected to at least two including the other two of said wheel brakes, and wherein said electronically controlled pressure control valve is controlled by said control signals from said electronic control unit so that the output of said sensor will fall within a predetermined relation with the output of said braking operation detecting means.

2. A vehicle brake system as claimed in claim 1 wherein each of the wheels mounted on at least one of the axles of the vehicle has both a wheel brake connected to one of said each static pressure brake lines and a wheel brake connected to said dynamic pressure brake line.

3. A vehicle brake system as claimed in claim 1 or 2 wherein the wheel brakes connected to said dynamic pressure lines are mounted on wheels having a mechanical parking brake.

4. A vehicle brake system as claimed in claim 1 or 2 wherein the wheel brakes connected to said dynamic pressure brake lines are mounted on driving wheels of an electric car or an automatic-transmission car.
